# EUROPEAN PATENT APPLICATION

(11) **EP 4 772 769 A1**
(43) Date of publication of application: **08.07.2026**
(21) Application number: 24881032.7
(22) Date of filing: 04.06.2024
(51) Int. Cl.: F16H 57/04, B60K 1/00

(54) **COOLING SYSTEM FOR ELECTRIC DRIVE ASSEMBLY, ELECTRIC DRIVE ASSEMBLY, VEHICLE AND CONTROL METHOD**

(30) Priority: 26.10.2023 CN 202311417909
(71) Applicant: Dongfeng Motor Group Co., Ltd., Wuhan, Hubei 430000 (CN)
(72) Inventor: YU, Jiajia, Wuhan, Hubei 430000 (CN); LEI, Jun, Wuhan, Hubei 430000 (CN); XU, Jing, Wuhan, Hubei 430000 (CN); JIN, Xiang, Wuhan, Hubei 430000 (CN); KONG, Bo, Wuhan, Hubei 430000 (CN)
(74) Representative: Valet Patent Services Limited
(86) International application number: PCT/CN2024/097348
(87) International publication number: WO 2025/086654

(57) **Abstract**

A cooling system for an electric drive assembly is used for supplying a lubricating oil to the electric drive assembly. The electric drive assembly comprises a motor assembly and a variable-speed gear set. The cooling system comprises a mechanical oil pump (10) and an electronic oil pump (20). The mechanical oil pump (10) is configured to be drivingly connected to the variable-speed gear set. The mechanical oil pump (10) can rotate along with the electric drive assembly to provide a circulating power for a cooling oil. The electronic oil pump (20) is configured to provide the circulating power for the cooling oil when an oil temperature of the cooling oil is higher than a first preset temperature and a vehicle speed is lower than a first preset vehicle speed. Also provided are an electric drive assembly, a vehicle, and a control method.

## Description

### CROSS-REFERENCE TO RELATED APPLICATION

This application claims priority to Chinese Patent Application No. 202311417909.2 filed on October 26, 2023, the entire content of which are incorporated herein by reference.

### TECHNICAL FIELD

The invention relates to the technical field of vehicles, and in particular to a cooling system for an electric drive assembly, an electric drive assembly, a vehicle and a control method.

### BACKGROUND

In the related art, electric drive assemblies mostly adopt an electronic oil pump. The electronic oil pump includes a pump body and a driving member. The driving member is difficult to be started in a low-temperature environment.

### SUMMARY

### TECHNICAL PROBLEM

In view of this, embodiments of the invention provide a cooling system for an electric drive assembly, an electric drive assembly, a vehicle and a control method, which can be adapted to a low-temperature environment.

### TECHNICAL SOLUTION

To achieve the above objective, a first aspect of an embodiment of the invention provides a cooling system for an electric drive assembly, for supplying a lubricating oil to the electric drive assembly. The electric drive assembly includes a motor assembly and a variable-speed gear set drivingly connected to the motor assembly, and the cooling system includes:
a mechanical oil pump configured to be drivingly connected to the variable-speed gear set; the mechanical oil pump being capable of rotating along with the variable-speed gear set to provide a circulating power for a cooling oil;
an electronic oil pump configured to provide circulating power for the cooling oil when a temperature of the motor assembly is higher than a first preset temperature and a vehicle speed is lower than a first preset vehicle speed.

In some embodiments, the mechanical oil pump is configured to be drivingly connected to an output gear of the variable-speed gear set.

In some embodiments, the cooling system includes a first circulation circuit, and the mechanical oil pump and the electronic oil pump are disposed in the first circulation circuit;
the first circulation circuit comprises:
a first cooling branch configured to supply the cooling oil to a stator of the motor assembly;
a second cooling branch configured to supply the cooling oil to a rotor of the motor assembly;
a third cooling branch configured to supply the cooling oil to a bearing of the variable-speed gear set.

In some embodiments, the cooling system includes an electromagnetic proportional valve which is configured to adjust a flow ratio of the cooling oil flowing into the first cooling branch, the second cooling branch and the third cooling branch.

In some embodiments, the cooling system comprises a thermostat and a heat exchange oil circuit which has an oil-water heat exchanger, the heat exchange oil circuit and the first circulation circuit together forming a second circulation circuit; in the second circulation circuit, the heat exchange oil circuit is located between three components which are the first cooling branch, the second cooling branch and the third cooling branch, and two components which are the mechanical oil pump and the electronic oil pump;
the thermostat is disposed at a connection between the heat exchange oil circuit and the first circulation circuit, and is configured to control the heat exchange oil circuit to be in communication with the first circulation circuit to switch to the second circulation circuit from the first circulation circuit , or control the heat exchange oil circuit to be disconnected from the first circulation circuit to switch the first circulation circuit from the second circulation circuit.

In some embodiments, the cooling system includes a water cooling circulation circuit, and the oil-water heat exchanger is disposed in the water cooling circulation circuit;
the water cooling circulation circuit includes a controller heat dissipation member, and the controller heat dissipation member is configured to cool a controller of the electric drive assembly.

In some embodiments, the mechanical oil pump includes a mechanical pump body and four check valves;
the mechanical pump body is an internal gear pump, and comprises a first oil inlet channel, a second oil inlet channel, a first oil outlet channel, a second oil outlet channel and an internal gear, the four check valves being respectively disposed in the first oil inlet channel, the second oil inlet channel, the first oil outlet channel and the second oil outlet channel;
first ends of the first oil inlet channel and the second oil inlet channel are in communication with an oil inlet hole of the mechanical pump body, a second end of the first oil inlet channel is in communication with a forward-rotation negative pressure side of the internal gear, and a second end of the second oil inlet channel is in communication with a reverse-rotation negative pressure side of the internal gear;
first ends of the first oil outlet channel and the second oil outlet channel are in communication with an oil outlet hole of the mechanical pump body, a second end of the first oil outlet channel is in communication with a forward-rotation high-pressure side of the internal gear, and a second end of the second oil outlet channel is in communication with a reverse-rotation high-pressure side of the internal gear.

A second aspect of the embodiments of the invention provides an electric drive assembly, including:
a housing having a mounting cavity;
a motor assembly disposed in the mounting cavity;
a variable-speed gear set disposed in the mounting cavity and drivingly connected to the motor assembly; and
the cooling system according to any one of the above embodiments, the mechanical oil pump being disposed in the mounting cavity.

A third aspect of the embodiments of the invention provides a vehicle, including the electric drive assembly according to any one of the above embodiments. Two sets of the electric drive assemblies are provided, which are respectively used for a front drive and a rear drive of the vehicle, and the two sets of electric drive assemblies are disposed in opposite directions.

A fourth aspect of the embodiments of the invention provides a method for controlling a cooling system, which is applicable to the cooling system according to any one of the above embodiments. The control method includes:
acquiring a current temperature of the motor assembly;
acquiring a current vehicle speed;
comparing the current temperature with a first preset temperature;
comparing, if the current temperature is higher than the first preset temperature, the current vehicle speed with a first preset vehicle speed;
controlling, if the current vehicle speed is lower than the first preset vehicle speed, the electronic oil pump to be turned on.

In some embodiments, after the step of controlling, if the current vehicle speed is lower than the first preset vehicle speed, the electronic oil pump to be turned on, the control method includes:
controlling, if the current vehicle speed is higher than a second preset vehicle speed, the electronic oil pump to be turned off, the second preset vehicle speed being greater than or equal to the first preset vehicle speed.

In some embodiments, the first preset oil temperature is -30°C.

In some embodiments, the first preset vehicle speed ranges from 30 km/h to 40 km/h.

A fifth aspect of the embodiments of the invention provides a method for controlling a cooling system, which is applicable to the cooling system. The control method includes:
acquiring a current oil temperature;
if the current oil temperature is less than a second preset temperature, adjusting the thermostat to enter the first circulation circuit;
if the current oil temperature is greater than or equal to the second preset temperature, adjusting the thermostat to enter the second circulation circuit.

In some embodiments, the first preset oil temperature is 60°C.

### ADVANTAGEOUS EFFECTS

In the cooling system for the electric drive assembly, the electric drive assembly, the vehicle and the control method according to the embodiments of the invention, a mechanical oil pump is provided and is drivingly connected to the variable-speed gear set. When the electric drive assembly is started and the variable-speed gear set starts to rotate, the mechanical oil pump rotates along with the variable-speed gear set and starts to pump oil, and no additional driving member is required to drive the mechanical oil pump to work, so that the cooling system can be adapted to a low-temperature environment. In addition, when the temperature of the motor assembly is higher than the first preset temperature and the vehicle speed is lower than the first preset vehicle speed, that is, when the temperature of the motor assembly is too high and the oil supply of the mechanical oil pump is relatively low, the electronic oil pump provides circulating power for the cooling oil, which can increase the oil supply to meet the cooling demand.

### BRIEF DESCRIPTION OF DRAWINGS

FIG. 1 is a schematic structural diagram of a cooling system for an electric drive assembly according to an embodiment of the invention.
FIG. 2 is a cross-sectional view of a mechanical oil pump of the cooling system for the electric drive assembly according to an embodiment of the invention.
FIG. 3 is a schematic diagram showing an oil circuit of the mechanical oil pump in forward rotation of the cooling system for the electric drive assembly according to an embodiment of the invention.
FIG. 4 is a schematic diagram showing an oil circuit of the mechanical oil pump in reverse rotation of the cooling system for the electric drive assembly according to an embodiment of the invention.
FIG. 5 is a schematic flow chart of a method for controlling a cooling system according to an embodiment of the invention.

### Description of reference numerals

10, mechanical oil pump; 11, mechanical pump body ; 12, check valve; 10a, oil inlet hole ;10b, oil outlet hole; 11a, first oil inlet channel; 11b, second oil inlet channel; 11c, first oil outlet channel; 11d, second oil outlet channel; 20, electronic oil pump; 211, stator; 212, rotor; 31, first cooling branch; 32, second cooling branch; 33, third cooling branch; 40, electromagnetic proportional valve; 50, thermostat; 60, heat exchange oil circuit; 61, oil-water heat exchanger; 70, water cooling circulation circuit; 71, water pump; 72, cooler; 73, controller heat dissipation member; 221, oil sump; 230, controller; 240, temperature sensor; 251, bearing.

### DETAILED DESCRIPTION

The embodiments of the invention will be described in further detail below with reference to the drawings and examples. The following examples are used to illustrate the invention, but are not intended to limit the scope of the invention.

In the description of the embodiments of the invention, it should be noted that the terms "first", "second" and "third" are only used for descriptive purposes, and cannot be understood as indicating or implying relative importance.

In the related art, most electric drive assemblies adopt an electronic oil pump. The electronic oil pump includes a pump body and a driving member. In a low-temperature environment, a viscosity of the oil is very high, and the driving member has a problem of difficulty in starting.

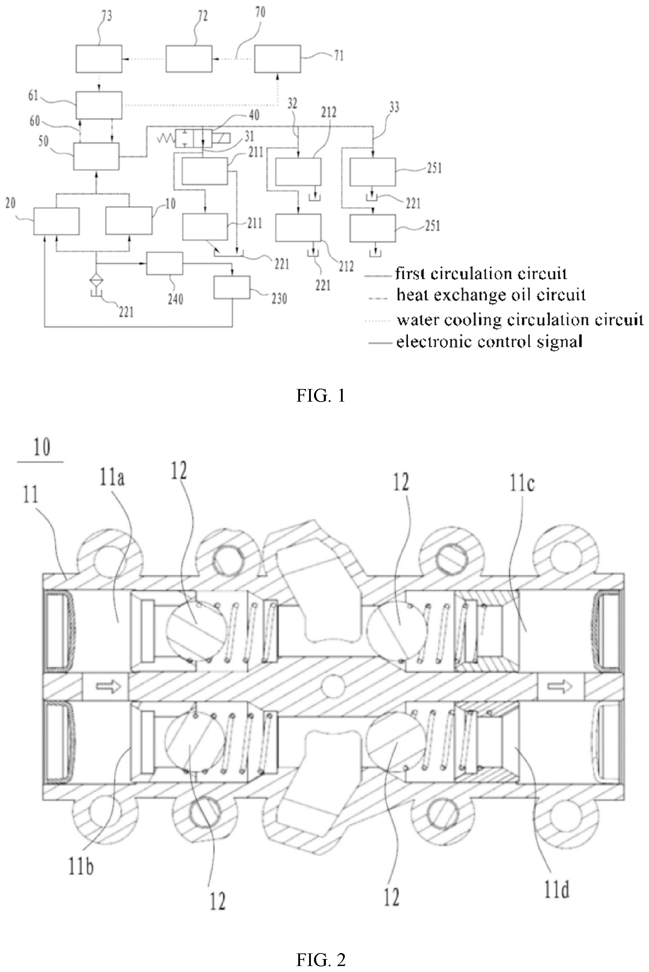

In this regard, as shown in FIG. 1, according to an embodiment of the invention, a cooling system for an electric drive assembly is provided for supplying a lubricating oil to the electric drive assembly. The electric drive assembly includes a motor assembly and a variable-speed gear set. The motor assembly includes a stator 211 and a rotor 212 which is disposed within the stator 211 and capable of rotating. The variable-speed gear set is drivingly connected to the motor assembly for transmitting a power of the motor assembly to wheels.

The cooling system includes a mechanical oil pump 10 and an electronic oil pump 20. The mechanical oil pump 10 is a mechanical pump body structure, and requires an external power to drive oil pumping due to no power source. The electronic oil pump 20 includes a mechanical pump body and a driving member. The driving member drives the mechanical pump body to pump oil.

The mechanical oil pump 10 is configured to be drivingly connected to the variable-speed gear set. The mechanical oil pump 10 can be rotated along with the electric drive assembly to provide a circulating power for the cooling oil, that is, when the electric drive assembly is started, the mechanical oil pump 10 starts to rotate along with the electric drive assembly to pump oil.

The electronic oil pump 20 is configured to provide the circulating power for the cooling oil when an oil temperature of the cooling oil is higher than a first preset temperature and a vehicle speed is lower than a first preset vehicle speed. If the oil temperature of the cooling oil is higher than the first preset temperature, it indicates that a cooling capacity of the current cooling oil is decreased. If the vehicle speed is lower than the first preset vehicle speed, it indicates that a rotation speed of the variable-speed gear set is relatively low. Since the rotation speed is proportional to an oil supply amount of the mechanical oil pump 10, the oil supply amount of the mechanical oil pump 10 is also relatively low at this time. The electronic oil pump 20 provides the circulating power for the cooling oil, to be capable of increasing the oil supply amount to meet a cooling demand.

In this embodiment, the mechanical oil pump 10 is provided and drivingly connected to the variable-speed gear set. When the electric drive assembly is started, the variable-speed gear set begins to rotate, and thus the mechanical oil pump 10 rotates along with the variable-speed gear set and starts to pump oil, without requiring an additional driving member to drive the mechanical oil pump 10 to work. Therefore, there is no problem that the electronic oil pump cannot be started due to too low temperature and excessive viscosity of the lubricating oil, and the cooling system can be adapted to a low-temperature environment. In addition, when a temperature of the motor assembly is higher than the first preset temperature and the vehicle speed is lower than the first preset vehicle speed, that is, when the temperature of the motor assembly is too high and the oil supply amount of the mechanical oil pump 10 is also relatively low, the electronic oil pump 20 provides the circulating power for the cooling oil, thereby increasing the oil supply amount to meet the cooling demand.

Exemplarily, the mechanical oil pump 10 is configured to be drivingly connected to an output gear of the variable-speed gear set.

It can be understood that the output gear of the variable-speed gear set is used to drive the wheels to rotate, and a transmission connection with the output gear can make an oil pumping amount of the mechanical oil pump 10 to be stably and positively correlated with the vehicle speed.

Exemplarily, the cooling system includes a first circulation circuit. The mechanical oil pump 10 and the electronic oil pump 20 are disposed in the first circulation circuit. The mechanical oil pump 10 and the electronic oil pump 20 provide a circulating power for a cooling oil to a first circulation circuit.

The first circulation circuit includes a first cooling branch 31, a second cooling branch 32 and a third cooling branch 33. The first cooling branch 31 is configured to supply a cooling oil to the stator 211 of the motor assembly of the electric drive assembly. The second cooling branch 32 is configured to supply cooling oil to the rotor 212 of the motor assembly of the electric drive assembly. The third cooling branch 33 is configured to supply cooling oil to the bearing 251 of the variable-speed gear set of the electric drive assembly. In this way, the cooling oil can be supplied to the stator 211 and the rotor 212 of the motor assembly, and the bearing 251 of the variable-speed gear set, to reduce operating temperatures of the three components.

It can be understood that the first cooling branch 31, the second cooling branch 32, and the third cooling branch 33 may be external pipes serving as connecting members between adjacent components, or may be channels formed within the housing of the electric drive assembly serving as connecting members between adjacent components.

It can be understood that an end of the first cooling branch 31 for supplying the cooling oil to the stator 211 of the motor assembly of the electric drive assembly may be provided with a plurality of first sub-branches, for supplying the cooling oil to a plurality of different areas of the stator 211 through the plurality of first sub-branches, for example, supplying the cooling oil to two ends of the stator 211 along an axial length.

An end of the second cooling branch 32 for supplying a cooling oil to the rotor 212 of the motor assembly of the electric drive assembly may be provided with a plurality of second sub-branches, for supplying the cooling oil to a plurality of different areas of the rotor 212 through the plurality of second sub-branches, for example, supplying the cooling oil to two ends of the rotor 212 along the axial length.

An end of the third cooling branch 33 for supplying a cooling oil to the bearing 251 of the variable-speed gear set of the electric drive assembly may be provided with a plurality of third sub-branches, for supplying the cooling oil to the bearings 251 at two ends of the variable-speed gear set through the plurality of second sub-branches.

Exemplarily, the cooling system includes an electromagnetic proportional valve 40 configured to adjust a flow ratio of the cooling oil flowing into the first cooling branch 31, the second cooling branch 32 and the third cooling branch 33.

The electromagnetic proportional valve 40 is a hydraulic valve that converts an input electrical signal proportionally into a force or displacement to control the flow rate. The flow ratio of the cooling oil flowing into the first cooling branch 31, the second cooling branch 32 and the third cooling branch 33 is adjusted through the electromagnetic proportional valve.

It should be noted that in some vehicles, two sets of electric drive assemblies are provided. The two sets of electric drive assemblies are distributed at an interval along a driving direction of the vehicle, and are disposed in opposite directions. When one of the electric drive assemblies rotates forward, the other electric drive assembly rotates in reverse. Since a lubrication of the bearing 251 of the variable-speed gear set is realized by a rotation of an oil guide ribs on gears of the variable-speed gear set, a reverse rotation of the gears will change an amount of oil delivered. By providing the proportional control valve, a compensation can be provided when an oil supply to the bearing 251 of the variable-speed gear set is insufficient.

In some embodiments, the electromagnetic proportional valve 40 is disposed in the first cooling branch 31. A cooling oil flowing into the first cooling branch 31, after passing through the electromagnetic proportional valve 40, flows to the stator 211 of the motor assembly.

It can be understood that when the motor assembly is in a low-temperature environment, the demand for cooling oil is small or even no oil cooling is required. At this time, the amount of oil flowing into the first cooling branch 31 can be reduced or even the first cooling branch 31 can be closed through the electromagnetic proportional valve 40, and the cooling system only delivers cooling oil to the second cooling branch 32 and the third cooling branch 33 at this time. In this way, an oil delivery volume of the cooling system is reduced, and the power consumption is reduced.

In some embodiments, the electromagnetic proportional valve 40 is disposed in the third cooling branch 33 to adjust the amount of cooling oil flowing into the bearing of the variable-speed gear set.

It can be understood that when the vehicle is on a horizontal road or a road with a small inclination angle, a splash lubrication inside a gearbox can meet the lubrication demand of the bearing, so the third cooling branch 33 can be closed, thereby reducing the oil delivery volume of the cooling system and the power consumption. When the vehicle is tilted longitudinally or laterally at a large angle, the electromagnetic proportional valve 40 is opened to make the cooling oil to flow into the third cooling branch 33 so as to actively lubricate the bearing and supplement the oil supply to the bearing.

Exemplarily, the cooling system includes a thermostat 50 and a heat exchange oil circuit 60 with an oil-water heat exchanger 61.

The thermostat 50 includes a temperature sensing component, and thus can control the flow path of the cooling liquid according to temperature.

The oil-water heat exchanger 61 is configured to cool down the cooling oil in the heat exchange oil circuit 60. Specifically, the oil-water heat exchanger 61 is located in a water circulation path. Low-temperature water flows into the oil-water heat exchanger 61, absorbs the heat of the cooling oil and then rises in temperature, circulates to the cooler to be cooled down, and then flows back into the oil-water heat exchanger 61.

The heat exchange oil circuit 60 and the first circulation circuit together form a second circulation circuit. That is, the cooling oil in the first circulation circuit flows into the heat exchange oil circuit 60, is cooled down by the oil-water heat exchanger 61, and then flows back to the first circulation circuit to supply low-temperature cooling oil to the stator 211 and the rotor 212 of the motor assembly, and the bearing 251 of the variable-speed gear set.

In the second circulation circuit, the heat exchange oil circuit 60 is located between three components which are the first cooling branch 31, the second cooling branch 32 and cooling branch 33, and two components which are the third the mechanical oil pump 10 and the electronic oil pump 20. When the electronic oil pump 20 is turned on, the cooling oil can flow, through the mechanical oil pump 10 and the electronic oil pump 20, into the heat exchange oil circuit 60, and flows, after being cooled by the oil-water heat exchanger 61 of the heat exchange oil circuit 60, into the first cooling branch 31, the second cooling branch 32 and the third cooling branch 33, to cool the stator 211 and the rotor 212 of the motor assembly, and the bearing 251 of the variable-speed gear set.

The thermostat 50 is disposed at a connection between the heat exchange oil circuit 60 and the first circulation circuit, for controlling the heat exchange oil circuit to be in communication with the first circulation circuit so as to switch to the second circulation circuit from the first circulation circuit, or controlling the heat exchange oil circuit 60 to be disconnected from the first circulation circuit toswitch to the first circulation circuit from the second circulation circuit.

The thermostat 50 controls a communication or disconnection between the heat exchange oil circuit 60 and the first circulation circuit according to the oil temperature. For example, when a temperature is higher than or equal to 60°C, the thermostat 50 controls the heat exchange oil circuit 60 to be in communication with the first circulation circuit toswitch to the second circulation circuit from the first circulation circuit , thereby cooling the cooling oil and improving a cooling effect. When the temperature is lower than 60°C, the thermostat 50 controls the heat exchange oil circuit 60 to be disconnected from the first circulation circuit to switch to the first circulation circuit from the second circulation circuit , thereby reducing energy consumption.

Exemplarily, the cooling system includes a water cooling circulation circuit 70, and the oil-water heat exchanger 61 is disposed in the water cooling circulation circuit 70.

Optionally, the water cooling circulation circuit 70 includes a water pump 71 and a cooler 72. The water pump 71 is configured to provide a power for water circulation. The cooler 72 is used to dissipate heat from a temperature-increased water for cooling down.

The water cooling circulation circuit 70 includes a controller heat dissipation member 73 which is configured to cool a controller of an electric drive assembly. That is, in the water cooling circulation circuit 70 of this embodiment, the oil-water heat exchanger 61 and the controller heat dissipation member 73 are heat-releasing components, and the cooler 72 is a heat-absorbing and cooling component. Optionally, the controller includes heat-generating components such as a control unit and a DC-DC converter.

An embodiment of the invention further provides an electric drive assembly, including a housing, a motor assembly, a variable-speed gear set and a cooling system.

The housing includes a mounting cavity, and the motor assembly is disposed in the mounting cavity. The variable-speed gear set is disposed in the mounting cavity and is drivingly connected to the motor assembly. In this way, the motor assembly can drive the variable-speed gear set to rotate, thereby driving wheels to rotate.

It can be understood that the housing includes an oil sump 221, the oil sump 221 has an oil storage cavity for storing cooling oil. An oil inlet of the mechanical oil pump 10 and an oil inlet of the electronic oil pump 20 are in communication with the oil storage cavity.

The cooling system includes the mechanical oil pump 10, which is disposed in the mounting cavity. When the variable-speed gear set rotates, the mechanical oil pump 10 can rotate along with the variable-speed gear set to pump oil. It can be understood that since the mechanical oil pump 10 is disposed in the mounting cavity of the housing, the housing can reduce the noise generated by the mechanical oil pump.

The electric drive assembly includes a controller 230 and a temperature sensor 240. The temperature sensor 240 is disposed in the first circulation circuit, such as in the oil storage cavity or the mounting cavity, for acquiring the oil temperature. The controller 230 can control the power output and cooling of the electric drive assembly, and can also control a starting and stopping of the electronic oil pump 20.

Exemplarily, the mechanical oil pump 10 includes a mechanical pump body 11 and four check valves 12.

The mechanical pump body 11 is an internal gear pump, and includes a first oil inlet channel 11a, a second oil inlet channel 11b, a first oil outlet channel 11c, a second oil outlet channel 11d and an internal gear. The internal gear is located between two components which are the first oil inlet channel 11a and the second oil inlet channel 11b, and two components which are the first oil outlet channel 11c and the second oil outlet channel 11d.

The four check valves 12 are respectively disposed in the first oil inlet channel 11a, the second oil inlet channel 11b, the first oil outlet channel 11c and the second oil outlet channel 11d. That is, the first oil inlet channel 11a, the second oil inlet channel 11b, the first oil outlet channel 11c and the second oil outlet channel 11d each are provided with one check valve 12 therein.

First ends of the first oil inlet channel 11a and the second oil inlet channel 11b are in communication with the oil inlet hole 10a of the mechanical pump body 11. A second end of the first oil inlet channel 11a is in communication with a forward-rotation negative pressure side of the internal gear. A second end of the second oil inlet channel 11b is in communication with a reverse-rotation negative pressure side of the internal gear. First ends of the first oil outlet channel 11c and the second oil outlet channel 11d are in communication with the oil outlet hole 10b of the mechanical pump body 11. A second end of the first oil outlet channel 11c is in communication with a forward-rotation high-pressure side of the internal gear. A second end of the second oil outlet channel 11d is in communication with a reverse-rotation high-pressure side of the internal gear.

It can be understood that the internal gear is driven by the variable-speed gear set. The internal gear has a forward-rotation negative pressure side, a reverse-rotation negative pressure side, a forward-rotation high-pressure side, and a reverse-rotation high-pressure side. Optionally, the forward-rotation negative pressure side is an oil suction side when the internal gear rotates forward. The reverse-rotation negative pressure side is an oil suction side when the internal gear rotates reversely. The forward-rotation high-pressure side is an oil discharge side when the internal gear rotates forward. The reverse-rotation high-pressure side is an oil discharge side when the internal gear rotates reversely.

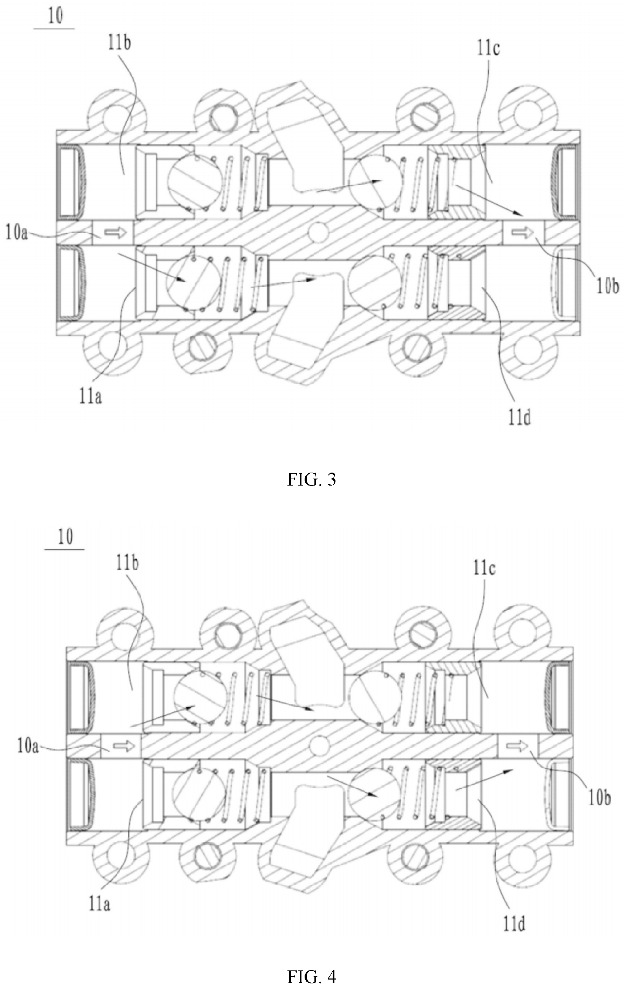

As shown in FIG. 3, when the internal gear rotates forward, the check valve 12 in the first oil inlet channel 11a is opened. The check valve 12 in the second oil inlet channel 11b is closed. The check valve 12 in the first oil outlet channel 11c is opened, and the check valve 12 in the second oil outlet channel 11d is closed. The cooling oil from the oil inlet hole flows through the first oil inlet channel 11a, the forward-rotation negative pressure side of the internal gear, the forward-rotation high-pressure side of the internal gear, and the first oil outlet channel 11c in sequence, and flows out from the oil outlet hole.

As shown in FIG. 4, when the internal gear rotates reversely, the check valve 12 in the first oil inlet channel 11a is closed. The check valve 12 in the second oil inlet channel 11b is opened. The check valve 12 in the first oil outlet channel 11c is closed. The check valve 12 in the second oil outlet channel 11d is opened. The reverse-rotation negative pressure side is the oil suction side. The cooling oil from the oil inlet hole flows through the second oil inlet channel 11b, the reverse-rotation negative pressure side of the internal gear, the reverse-rotation high-pressure side of the internal gear, and the second oil outlet channel 11d in sequence, and flows out from the oil outlet hole.

In this way, the mechanical oil pump has an oil pumping function both when the variable-speed gear set rotates forward and reversely.

It can be understood that in some embodiments, the vehicle are equipped with two sets of electric drive assemblies disposed oppositely and reversely. The two sets of electric drive assemblies are respectively used as a front drive and a rear drive of the vehicle. When the vehicle performs an in-situ U-turn, both sets of electric drive assemblies can supply oil normally.

In some embodiments, the first oil inlet channel 11a and the second oil inlet channel 11b are disposed in parallel. The first oil outlet channel 11c and the second oil outlet channel 11d are disposed in parallel.

In some embodiments, central axes of the first oil inlet channel 11a and the second oil outlet channel 11d are coincident. Central axes of the second oil inlet channel 11b and the first oil inlet channel 11a are coincident.

An embodiment of the invention further provides a vehicle, including at least two sets of electric drive assemblies respectively used for a front drive and a rear drive of the vehicle. The two sets of electric drive assemblies are arranged in opposite directions, that is, the two sets of electric drive assemblies are disposed 180° opposite to each other.

It can be understood that since the two sets of electric drive assemblies are disposed in opposite directions, when one set of electric drive assembly rotates forward, the other set of electric drive assembly rotates reversely. Since the lubrication of the bearing 251 of the variable-speed gear set is realized by the rotation of the oil guide ribs on the gears of the variable-speed gear set, the reverse rotation of the gears will change the amount of oil delivered. The changed amount of oil will affect the lubrication of the bearing 251 of the variable-speed gear set. When the oil supply to the bearing 251 of the variable-speed gear set is insufficient, the oil supply to the bearing 251 can be compensated by adjusting the proportional control valve.

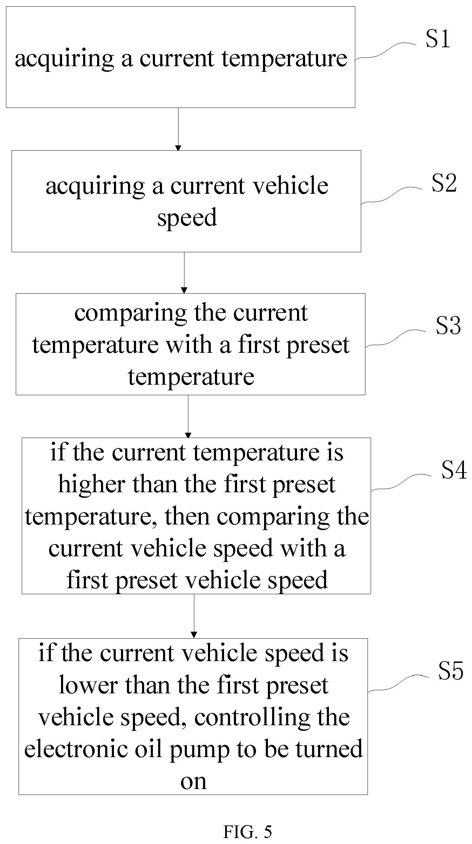

As shown in FIG. 5, an embodiment of the invention further provides a method for controlling a cooling system, which is applicable to the cooling system. The control method includes:

S1: acquiring a current temperature of a motor assembly.

Optionally, the current temperature of the motor assembly can be obtained by measuring the stator of the motor assembly, or by measuring the cooling oil. Alternatively, a first value can be obtained by measuring the stator of the motor assembly, and a second value can be obtained by measuring the cooling oil. The higher one of the first value and the second value can be selected as the current temperature of the motor assembly. The above measurements can be obtained by measuring with a temperature sensor.

The method further includes step S2, acquiring a current vehicle speed.

Optionally, the current vehicle speed can be calculated according to a rotation speed of the wheels and the diameter of the wheels. The rotation speed of the wheels can be determined according to a rotation speed of the output gear of the variable-speed gear set.

The method further includes step S3: comparing the current temperature with a first preset temperature.

The first preset temperature is a preset value. In some embodiments, the first preset temperature is -30°C. It should be noted that the viscosity of the lubricating oil is higher at this temperature.

The method further includes step S4: if the current temperature is higher than the first preset temperature, then comparing the current vehicle speed with a first preset vehicle speed.

It should be noted that the value of the first preset vehicle speed varies with different vehicle models. In some embodiments, for a corresponding vehicle model, the first preset vehicle speed is determined by obtaining NVH (Noise, Vibration, Harshness) performance of the oil pump motor at different vehicle speeds.

In some embodiments, the first preset vehicle speed ranges from 30 km/h to 40 km/h. The first preset vehicle speed may be30 km/h, 35 km/h or 40 km/h.

The method further includes step S5: if the current vehicle speed is lower than the first preset vehicle speed, controlling the electronic oil pump 20 to be turned on.

The order of step S1 and step S2 is not limited.

It can be understood that after step S3, if the current temperature is lower than the first preset temperature, the electronic oil pump 20 is not started, and the oil supply from the mechanical oil pump 10 can meet the cooling demand of the cooling system at this time.

It can be understood that after step S4, if the current vehicle speed is higher than the first preset vehicle speed, the electronic oil pump 20 is not started. At this time, the mechanical oil pump 10 drivingly connected to the variable-speed gear set has a large oil supply amount, to be capable of meeting the cooling demand of the cooling system.

By providing the mechanical oil pump 10, the mechanical oil pump 10 is drivingly connected to the variable-speed gear set. When the electric drive assembly is started and the variable-speed gear set starts to rotate, the mechanical oil pump 10 rotates along with the variable-speed gear set and starts to pump oil, without requiring an additional driving member to drive the mechanical oil pump 10 to work. In addition, when the current temperature of the motor assembly is higher than the first preset temperature and the vehicle speed is lower than the first preset vehicle speed, that is, when the current temperature of the motor assembly is too high and the oil supply amount of the mechanical oil pump 10 is also relatively low, the electronic oil pump 20 provides circulating power for the cooling oil, thereby increasing the oil supply amount to meet the cooling demand.

Exemplarily, after step S5, the control method includes:

S6: if the current vehicle speed is higher than a second preset vehicle speed, controlling the electronic oil pump 20 to be turned off, the second preset vehicle speed being greater than or equal to the first preset vehicle speed.

It can be understood that the higher the current vehicle speed is, the larger the oil supply amount of the mechanical oil pump 10 is. When the vehicle speed is higher than the second preset vehicle speed, the oil supply amount of the mechanical oil pump 10 can meet the cooling demand, and the electronic oil pump 20 can be turned off to reduce energy consumption and noise at the same time.

It can be understood that the value of the second preset vehicle speed varies with different vehicle models. In some embodiments, the second preset vehicle speed ranges from 80 km/h to 100 km/h. The second preset vehicle speed maybe 80 km/h, 90 km/h or 100 km/h.

An embodiment of the invention further provides a method for controlling a cooling system. The method includes:
S10: acquiring a current oil temperature; and
S20: adjusting, if the current oil temperature is less than a second preset temperature, the thermostat 50 so as to switch to the first circulation circuit.

In some embodiments, the second preset oil temperature is 60°C.

S30: adjusting, if the current oil temperature is greater than or equal to the second preset temperature, the thermostat 50 so as to switch to the second circulation circuit.

The thermostat 50 can control a communication or disconnection between the heat exchange oil circuit 60 and the first circulation circuit according to the oil temperature. When a temperature is higher than or equal to 60°C, the thermostat 50 controls the heat exchange oil circuit 60 to be in communication with the first circulation circuit to switch to the second circulation circuit from the first circulation circuit, thereby cooling the cooling oil and improving a cooling effect. When the temperature is lower than 60°C, the thermostat 50 controls the heat exchange oil circuit 60 to be disconnected from the first circulation circuit to switch to the first circulation circuit from the second circulation circuit, thereby reducing energy consumption.

In the description of the invention, the description with reference to the terms "some embodiments", "exemplarily", "some examples" or the like means that a specific feature, structure, material or characteristic described in connection with the embodiment or example is included in at least one embodiment or example of the embodiments of the invention. In the invention, the illustrative expressions of the above terms are not necessarily directed to the same embodiment or example. Moreover, the specific features, structures, materials or characteristics described may be combined in any one or more embodiments or examples in a suitable manner. In addition, those skilled in the art can combine different embodiments or examples described in the invention and the features of different embodiments or examples without conflicting with each other.

The above descriptions are only preferred embodiments of the invention, and are not intended to limit the invention. For those skilled in the art, the invention may have various modifications and changes. Any modification, equivalent replacement, improvement and the like made within the spirit and principle of the invention shall be included in the protection scope of the invention.

## Claims

1. A cooling system for an electric drive assembly, for supplying a lubricating oil to the electric drive assembly, the electric drive assembly comprising a motor assembly and a variable-speed gear set drivingly connected to the motor assembly, **characterized in that** the cooling system comprises:
a mechanical oil pump configured to be drivingly connected to the variable-speed gear set, the mechanical oil pump being capable of rotating along with the variable-speed gear set to provide a circulating power for a cooling oil; and
an electronic oil pump configured to provide, when a temperature of the motor assembly is higher than a first preset temperature and a vehicle speed is lower than a first preset vehicle speed, the circulating power for the cooling oil.

2. The cooling system according to claim 1, wherein the mechanical oil pump is configured to be drivingly connected to an output gear of the variable-speed gear set.

3. The cooling system according to claim 1, further comprising a first circulation circuit, the mechanical oil pump and the electronic oil pump being disposed in the first circulation circuit;
the first circulation circuit comprises:
a first cooling branch configured to supply the cooling oil to a stator of the motor assembly;
a second cooling branch configured to supply the cooling oil to a rotor of the motor assembly;
a third cooling branch configured to supply the cooling oil to a bearing of the variable-speed gear set.

4. The cooling system according to claim 3, wherein the cooling system further comprises an electromagnetic proportional valve for adjusting a flow ratio of the cooling oil flowing into the first cooling branch, the second cooling branch and the third cooling branch.

5. The cooling system according to claim 4, wherein the electromagnetic proportional valve is disposed in the first cooling branch; or
the electromagnetic proportional valve is disposed in the third cooling branch.

6. The cooling system according to claim 4, wherein the cooling system further comprises a thermostat and a heat exchange oil circuit which has an oil-water heat exchanger, the heat exchange oil circuit and the first circulation circuit together forming a second circulation circuit; in the second circulation circuit, the heat exchange oil circuit is located between three components which are the first cooling branch, the second cooling branch and the third cooling branch, and two components which are the mechanical oil pump and the electronic oil pump;
the thermostat is disposed at a connection between the heat exchange oil circuit and the first circulation circuit, and is configured to control the heat exchange oil circuit to be in communication with the first circulation circuit so as to switch to the second circulation circuit from the first circulation circuit, or control the heat exchange oil circuit to be disconnected from the first circulation circuit so as to switch to the first circulation circuit from the second circulation circuit.

7. The cooling system according to claim 6, wherein the cooling system further comprises a water cooling circulation circuit in which the oil-water heat exchanger is disposed;
the water cooling circulation circuit comprises a controller heat dissipation member for cooling a controller of the electric drive assembly.

8. The cooling system according to claim 1, wherein the mechanical oil pump comprises a mechanical pump body and four check valves;
the mechanical pump body is an internal gear pump, and comprises a first oil inlet channel, a second oil inlet channel, a first oil outlet channel, a second oil outlet channel and an internal gear, the four check valves being respectively disposed in the first oil inlet channel, the second oil inlet channel, the first oil outlet channel and the second oil outlet channel;
first ends of the first oil inlet channel and the second oil inlet channel are in communication with an oil inlet hole of the mechanical pump body, a second end of the first oil inlet channel being in communication with a forward-rotation negative pressure side of the internal gear, a second end of the second oil inlet channel being in communication with a reverse-rotation negative pressure side of the internal gear;
first ends of the first oil outlet channel and the second oil outlet channel are in communication with an oil outlet hole of the mechanical pump body, a second end of the first oil outlet channel being in communication with a forward-rotation high-pressure side of the internal gear, a second end of the second oil outlet channel being in communication with a reverse-rotation high-pressure side of the internal gear.

9. An electric drive assembly, comprising:
a housing having a mounting cavity;
a motor assembly disposed in the mounting cavity;
a variable-speed gear set disposed in the mounting cavity and drivingly connected to the motor assembly; and
the cooling system according to any one of claims 1 to 8, the mechanical oil pump being disposed in the mounting cavity.

10. A vehicle, **characterized by** comprising the electric drive assembly according to claim 9, two sets of the electric drive assemblies being provided and respectively used for a front drive and a rear drive of the vehicle, the two sets of electric drive assemblies being disposed in opposite directions.

11. A method for controlling a cooling system, applicable to the cooling system according to any one of claims 1 to 8, **characterized by** comprising:
acquiring a current temperature of the motor assembly;
acquiring a current vehicle speed;
comparing the current temperature with a first preset temperature;
comparing, if the current temperature is higher than the first preset temperature, the current vehicle speed with a first preset vehicle speed;
controlling, if the current vehicle speed is lower than the first preset vehicle speed, the electronic oil pump to be turned on.

12. The method for controlling the cooling system according to claim 11, wherein after the controlling, if the current vehicle speed is lower than the first preset vehicle speed, the electronic oil pump to be turned on, the control method comprises:
controlling, if the current vehicle speed is higher than a second preset vehicle speed, the electronic oil pump to be turned off, the second preset vehicle speed being greater than or equal to the first preset vehicle speed.

13. The method for controlling the cooling system according to claim 12, wherein the first preset oil temperature is -30°C; and/or
the first preset vehicle speed ranges from 30 km/h to 40 km/h.

14. A method for controlling a cooling system, applicable to the cooling system according to claim 6, the method comprising:
acquiring a current oil temperature;
adjusting, if the current oil temperature is less than a second preset temperature, the thermostat to enter the first circulation circuit; and
adjusting, if the current oil temperature is greater than or equal to the second preset temperature, the thermostat to enter the second circulation circuit.

15. The method for controlling the cooling system according to claim 14, wherein the second preset oil temperature is 60°C.
